(19) Europäisches Patentamt
European Patent Office
Office européen des brevets

(11) **EP 2 093 552 A1**

(12) **EUROPEAN PATENT APPLICATION**

(43) Date of publication:
26.08.2009 Bulletin 2009/35

(51) Int Cl.:
*G01L 3/00* (2006.01)    *G01L 3/26* (2006.01)
*B63H 1/14* (2006.01)

(21) Application number: 08151821.9

(22) Date of filing: 22.02.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: **Wärtsilä Propulsion Netherlands B.V.**
5150 BB  Drunen (NL)

(72) Inventor: **Muntean, Tiberiu**
5150 BB Drunen (NL)

(74) Representative: **TBK-Patent**
**Bavariaring 4-6**
**80336 München (DE)**

(54) **Method of and device for determining propeller efficiency on board of a ship**

(57)    There is proposed a method of and a device for determining propeller efficiency η on board of a ship. The propeller efficiency η is calculated based on angular velocity n of the propeller, thrust T produced by the propeller, torque Q, and advance velocity $u_a$ of the water entering the propeller plane. The advance velocity $u_a$ is determined as a global quantity using measurement data produced by inducing harmonic excitation in the ship propulsion system when the ship is assumed to sail under a steady state. The propeller efficiency η is useful for optimizing propulsion efficiency or overall economical efficiency of the ship, scheduling ship maintenance, or designing propellers.

# Fig. 1

**Description**

Field of Invention

The invention relates to a method of and a device for determining propeller efficiency on board of a ship. The propeller efficiency is useful for optimizing propulsion efficiency or overall economical efficiency of the ship, scheduling ship maintenance, and designing propellers.

Background Art

US patent publication no. 4,459,671 discloses a method of minimizing the costs of a ship during a trip comprising the steps of:

   obtaining angular velocity and torque of the ship propeller shaft;
   deriving a function for the shaft horsepower in terms of these parameters;
   deriving a variable cost function from the horsepower function, a fuel factor, unit volume fuel costs and voyage distance for various velocities of the ship;
   deriving a fixed cost function on the basis of voyage time for the various velocities of the ship, loading time and total annual costs for maintaining the ship per unit time; and
   controlling the velocity of the ship to minimize the sum of fixed and variable costs.

US patent publication no. 4,334,425 discloses a system for indicating the presence of fuel penalties brought on by inefficient power plant components or degradation in performance of components. The primary inputs to the system are angular velocity and torque of the ship propeller shaft, fuel flow and velocity of the ship. One of the primary outputs from the system is total fuel consumption. Total fuel consumption is used as a factor for pinpointing external causes of fuel penalties such as hull fouling or propeller damage.

US 6,227,918 B1 discloses a device for determining propeller apparent slip on board of a ship as a measure of the theoretical propeller advance lost in water. The inputs to the system are velocity of the ship, engine speed, gear ratio, and propeller blade pitch. The data relating to propeller apparent slip is recorded to allow comparison of apparent slip for different propellers and under different conditions.

In the 1990's, Prof. Dr. Michael Schmiechen from TU Berlin worked on a theory of propulsion in which the propeller is regarded as a pump feeding energy into the water. Schmiechen was looking for a method to calculate the wake fraction and the thrust deduction number and eventually propeller efficiency. His work was presented in conferences and seminaries. The present invention is not related to this work.

Summary of Invention

A general object of the present invention is to reduce operating costs of a ship.

A more specific object of the present invention is to determine propeller efficiency with high accuracy on board of a ship.

Propeller efficiency can be calculated using the following equation (1):

$$\eta \ = \ \frac{Tu_a}{2\pi Qn} \qquad\qquad\qquad (1)$$

where $\eta$ is the propeller efficiency, n is angular velocity of the propeller, T thrust, Q torque, and $u_a$ advance velocity.

The angular velocity n represents the number of rotations of the propeller per second. The unit of the angular velocity n is [1/s]. The angular velocity is easy to measure with an inaccuracy of not more than 0.2%.

The thrust T represents the force that is produced by the propeller and is transmitted to the hull via the propeller shaft. The unit of the thrust T is [N]. It is possible to measure thrust T with strain gauges with an inaccuracy of 5 to 10%. The inaccuracy arises from electric noises due to thermal and electromagnetic effects on the strain gauge bridges. At present, there is ongoing research to decrease the inaccuracy below 1%.

The torque Q represents the rotational force or angular force which causes a change in rotational motion of the propeller. The unit of the torque Q is [Nm]. It is possible to measure the torque Q with an inaccuracy of not more than 1%.

The advance velocity $u_a$ is the velocity of the water entering the propeller plane. The advance velocity $u_a$ can

be regarded as the velocity of the propeller with respect to the surrounding water. Because of this, the advance velocity $u_a$ is also named ambient water velocity. The unit of the advance velocity $u_a$ is [m/s].

Advance velocity $u_a$ can be specified by the following equation (2):

$$u_a = (1 - w) u \qquad (2)$$

where u is the velocity of the ship with respect to the water, and w is the wake fraction number.

The wake fraction number w quantifies the wake field around the ship, that is, plainly speaking, a disturbed velocity vector field. The wake field is observed around any solid body moving through water. The wake field is affected by the ship velocity u, the form of the ship hull, the propeller accelerating the flow of water and therefore generating the propulsion power moving the ship, and the depth of the water below the hull of the ship. Solving equation (1) would be much easier if w or $u_a$ was a global quantity instead of a vector field.

Currently, it is possible to determine local advance velocity $u_a$ by two ways: numerical simulation and experimental measurement of laboratory or small scale flows. The methods used for the experimental measurement are Particle Image Velocimetry (PIV) and Laser Doppler Velocimetry (LDV). PIV and LDV devices cannot be mounted on board of a ship without enormous expenses. Therefore, an experimental measurement of the advance velocity $u_a$ on board of a ship, under real conditions, is out of question.

According to a first aspect of the present invention, there is provided a method of determining propeller efficiency η on board of a ship, comprising the steps of:

obtaining angular velocity n of the propeller;
obtaining thrust T produced by the propeller;
obtaining torque Q;
determining advance velocity $u_a$ of the water entering the propeller plane as a global quantity using measurement data produced by inducing harmonic excitation in the ship propulsion system when the ship is assumed to sail under a steady state; and
calculating the propeller efficiency η based on the obtained values of angular velocity n, thrust T and torque Q and the determined value of advance velocity $u_a$.

As mentioned above, there are no established methods for measuring the advance velocity $u_a$ directly as a global quantity on board of a ship. In view of that, the present invention proposes determining the advance velocity $u_a$ using measurement data produced by inducing harmonic excitation in the ship propulsion system when the ship is assumed to sail under a steady state.

The source of harmonic excitation is either natural or artificial. A natural source of harmonic excitation are waves and wind which act on the ship hull and make the ship pitch, roll and yaw. An artificial source of harmonic excitation is a sinusoidal change in the control input for controlling the ship propulsion system.

The steady state is achieved when the control input for controlling the ship propulsion system is stationary and the ship sails with this stationary control for a long time such that the variables ship velocity u and advance velocity $u_a$ can be considered as being independent of time, i.e. stable under steady state sailing.

Besides this, the external factors that act on the ship dynamics must not be above a certain level. For example, in bad weather conditions the waves and wind acting on the hull will move the ship in pitch, roll and yaw directions. If the ship yaws or rolls, then the propeller also yaws or rolls, meaning that there are additional directions of motion for the propeller, and therefore additional components of the velocity and force vectors at the propeller. If the movements in the three directions are large enough these can cause considerable variations in propeller dynamics. In such conditions the assumption that the ship velocity u and the advance velocity $u_a$ are independent of time does not hold anymore.

The frequency and the amplitude of the harmonic excitation induced in the ship propulsion system must meet certain conditions in order to produce the measurement data for determining the advance velocity $u_a$. The frequency of the harmonic excitation should be high enough not to cause detectable changes in the ship velocity u, and low enough that the angular velocity n, the thrust T and the torque Q have time to react. The amplitude of the harmonic excitation should be high enough that the variations in the angular velocity n, the thrust T and the torque Q are measurable, but small enough not to load the ship propulsion system above its limit.

Under such conditions, the ship velocity u and the advance velocity $u_a$ are static variables, while the angular velocity n, the thrust T and the torque Q can be considered as dynamic variables. In the following, this is called a semi-dynamic state. Under such a semi-dynamic state, the frequency of the harmonic excitation will be the dominant frequency of the dynamic variables. This fact allows to analyze separately the amplitude and the phase of the dynamic variables, while it can be assumed that the ship velocity u and advance velocity $u_a$ are constants. Since the dynamic variables n, T and Q are coupled with the static variables u and $u_a$, there is enough information for determining the advance velocity $u_a$ as a global quantity.

The steps of obtaining angular velocity n, thrust T and torque Q may include measuring and/or simulating n, T and Q.

It is preferable that the harmonic excitation is induced by artificially introducing controlled oscillations in the ship propulsion system. Introducing artificial oscillations has the advantage that the propeller efficiency η can be determined at a time when natural sources of harmonic excitation like waves and wind do not introduce oscillations in the ship propulsion system which allow for determining the advance velocity $u_a$.

It is preferable that the artificial oscillations are introduced in the ship propulsion system by changing the target angular velocity $n_{set}$ of the propeller. The target angular velocity $n_{set}$ is a parameter of the ship propulsion system which is easy to control. As an alternative, the propeller blade pitch may be changed in the case of a controlled pitch propeller. As a further alternative, the rudder angle may be changed to obtain oscillations in thrust T and torque Q.

It is preferable that the measurement data is based on thrust data. Experiments show that the thrust T is very sensitive to small variations induced by harmonic excitation. However, measurements on the torque Q, or any other quantity that has the same dynamic behaviour as the aforementioned ones are not excluded.

The frequency of the harmonic excitation is preferably in the order of $10^{-1}$ Hz. Towards the lower limit of the frequency range, the ship has more time at disposal to react to the harmonic excitation, so that the assumption that the ship velocity u and the advance velocity $u_a$ are constants does not fully hold and the accuracy of the determined advance velocity $u_a$ decreases. The upper limit of the frequency range has practical reasons. From a theoretical point of view, higher frequencies up to $10^1$ Hz are suitable as well. But inducing harmonic excitations of such high frequencies in the ship propulsion system is usually not possible. Further, rotational dynamics become predominant at higher frequencies, so that the assumption that the frequency of the harmonic excitation is the dominant frequency of the dynamic variables does not hold.

The step of determining the advance velocity preferably includes modelling the ship dynamics by a set of interdependent equations describing engine torque control, rotational dynamics of the ship propulsion system, propeller dynamics, and hull dynamics. By considering both the steady state where the ship sails at a stationary control and the semi-dynamic state where the harmonic excitation produces small variations around the steady state of the stationary control and by inputting obtained values of angular velocity n, thrust T and torque Q into the model, the model can be used for calculating the advance velocity $u_a$. The model may be validated by directly measuring the advance velocity $u_a$ under the controlled conditions of a towing tank.

It is preferable that the ship has a mass in the order of $10^3$ tons or more. The higher the mass of the ship is, the less the ship velocity u and the advance velocity $u_a$ are affected by the harmonic excitation induced in the ship propulsion system. It is, however, not excluded that the invention is applicable to lighter ships.

According to a second aspect of the present invention, there is provided a device for determining propeller efficiency η on board of a ship, comprising:

> angular velocity obtaining means for obtaining angular velocity n of the propeller;
> thrust obtaining means for obtaining thrust T produced by the propeller;
> torque obtaining means for obtaining torque Q;
> advance velocity determining means for determining advance velocity $u_a$ of the water entering the propeller plane based on measurement data produced by inducing harmonic excitation in the ship propulsion system when the ship is assumed to sail under a steady state; and
> calculating means for calculating the propeller efficiency based on the angular velocity n obtained by the angular velocity obtaining means, the thrust T obtained by the thrust obtaining means, the torque Q obtained by the engine torque obtaining means, and the advance velocity $u_a$ determined by the advance velocity determining means.

The angular velocity obtaining means, the thrust obtaining means and the torque obtaining means may be embodied as input ports connected to sensors that measure angular velocity n, thrust T and torque Q. It is preferable that the sensors have an inaccuracy as small as possible to improve the accuracy of propeller efficiency calculation.

As an alternative, the angular velocity obtaining means, the thrust obtaining means and the torque obtaining means may be embodied as a computer that simulates or calculates angular velocity n, thrust T or torque Q based on certain input data such as ship velocity u, fuel consumption and the like.

The advance velocity determining means and the calculating means may be embodied by a computer. The computer may use a model, a map or an equation for determining the advance velocity $u_a$ based on the measurement data produced by inducing harmonic excitation in the ship propulsion system when the ship is assumed to sail under a steady state.

According to a third aspect of the present invention, the method of or the device for determining propeller efficiency on board of a ship is used for optimizing propulsion efficiency or overall economical efficiency of the ship. For example, the trimming of the ship can be adjusted such that propulsion efficiency is optimal for given external conditions like the weather.

According to a fourth aspect of the present invention, the method of or the device for determining propeller efficiency on board of a ship is used for scheduling ship maintenance.

It is known that propellers installed on ships are affected by wear, damages and fouling. All these factors decrease the propeller efficiency. If the propeller efficiency is calculated online on board of the ship, this can tell the ship owner when to replace the propeller by a new one to avoid excessive decrease of propeller efficiency and higher operating costs. Further, the propeller efficiency can be used for calculating hull efficiency from overall efficiency. This can tell the ship owner when to clean the hull to reduce operating costs.

According to a fifth aspect of the present invention, the method of or the device for determining propeller efficiency on board of a ship is used at the design stage of a propeller. Propeller design is done currently using Computational Fluid Dynamics (CFD) software. Numerical modelling of water flow around the propeller is one of the most complex applications for a CFD tool. The propeller efficiency determined on board of the ship may be used as a feedback for future propeller designs.

Brief Description of Drawings

Fig. 1 shows a scheme of principle how to determine propeller efficiency.

Figs. 2 to 4 show an exemplary result of a simulation performed in Process 1 of Fig. 1. Fig. 2 shows the target angular velocity $n_{set}$ as a control input, Fig. 3 the actual angular velocity n, and Fig. 4 the torque T produced by the propeller.

Best mode for Carrying Out the Invention

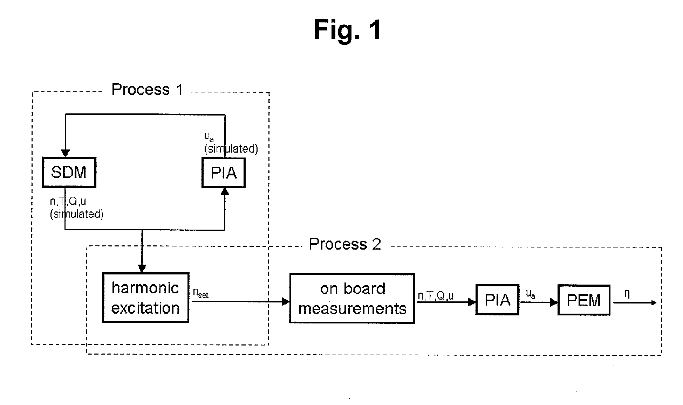

Fig. 1 shows that, in principle, two subsequent processes are used for determining propeller efficiency. In a first process (Process 1), a frequency or a set of frequencies of harmonic excitation is identified that is considered to be suitable for determining the propeller efficiency. In a second process (Process 2), the frequency or set of frequencies identified in Process 1 is used for determining the propeller efficiency $\eta$ on board of the ship.

- Process 1 -

The goal of Process 1 is to determine the frequency or the set of frequencies of harmonic excitation that is optimum for determining the propeller efficiency $\eta$ on board of the ship. The frequency is found using a Ship Dynamics Model (SDM) and a Parameter Identification Algorithm (PIA). The SDM is a set of interdependent equations describing torque control, rotational dynamics of the ship propulsion system, propeller dynamics, and hull dynamics. The PIA is a mathematical model that estimates the advance velocity $u_a$.

The parameters describing the target ship (dimensions, inertias, other parameters) are fed into the SDM. A simulation is run for the steady state. From the simulation quantities like the angular velocity n, the engine torque $Q_{eng}$, the velocity of water going out of the propeller plane $u_p$, the ship velocity u, the advance velocity $u_a$, the thrust T, and the torque Q are calculated. The simulated advance velocity $u_a$ is the velocity that has to be retrieved back (estimated) using the PIA.

Then, simulations are run for the semi-dynamic state. As discussed above, the semi-dynamic state means small oscillations around the steady state. Several frequencies for harmonic excitation are used. This process is repeated until the frequency for which the advance velocity $u_a$ is estimated with the lowest possible error is found. Then, depending on the value of the frequency, an interval around that value is considered. The decision upon the right frequency has to be made considering the capabilities of the propulsion system, i.e. engine, gear box, transmission, and propeller. Also, one has to look for the frequency that gives the best estimate of the advance velocity.

- Process 2 -

In process 2, the frequency obtained from the Process 1 is used to determine the propeller efficiency $\eta$ on board of the ship.

First, the captain has to make sure that the ship sails under a steady state. Then, measurements under the steady state are performed for thrust T, torque Q, angular velocity n, and optionally ship velocity u.

Then, a harmonic excitation is induced in the propulsion system, for example by setting the target angular velocity $n_{set}$. The same quantities as the aforementioned ones are measured. The measurements from both the steady state and the semi-dynamic state are fed to the PIA. The PIA estimates the advance velocity $u_a$. The estimated advance velocity $u_a$ is fed to a propeller efficiency model (PEM) in addition to measured values of thrust T, torque Q and angular velocity n. The PEM calculates the propeller efficiency $\eta$.

Experiments

Using the scheme of principle shown in Fig. 1, the ship dynamics of two ships were simulated and compared with the real behaviour. Both ships had two propellers.

Ship 1 was a ferry having a length 1 of 202.5 m, a mass m of 28.6 $10^3$ tons, a maximum speed $u_{max}$ of 11 m/s, a maximum angular velocity $n_{max}$ of 160/min, a maximum thrust $T_{max}$ of 773 kN, a maximum torque $Q_{max}$ of 781 kNm for one propeller, a propeller moment of inertia $I_p$ of 40,000 $Nm^2$, and a mass of water $m_w$ in the propeller control volume of 15,000 kg for one propeller.

Ship 2 was a bulk carrier having a length 1 of 308 m, a mass m of 78.8 $10^3$ tons, a maximum speed $u_{max}$ of 6.8 m/s, a maximum angular velocity $n_{max}$ of 120/min, a maximum thrust $T_{max}$ of 485 kN, a maximum torque $Q_{max}$ of 410 kNm for one propeller, a propeller moment of inertia $I_p$ of 83,100 $Nm^2$, and a mass of water $m_w$ in the propeller control volume of 19,600 kg for one propeller.

The parameters describing Ship 1 and Ship 2 were fed into the Ship Dynamics Model (SDM). Two simulations were run and compared with the real ship behaviour: start-up and variation of the target angular velocity $n_{set}$ around the steady state. Angular velocity n and thrust T were simulated. The simulated values for angular velocity n and thrust T were in good agreement with the real behaviour of the ships, showing that the SDM was valid.

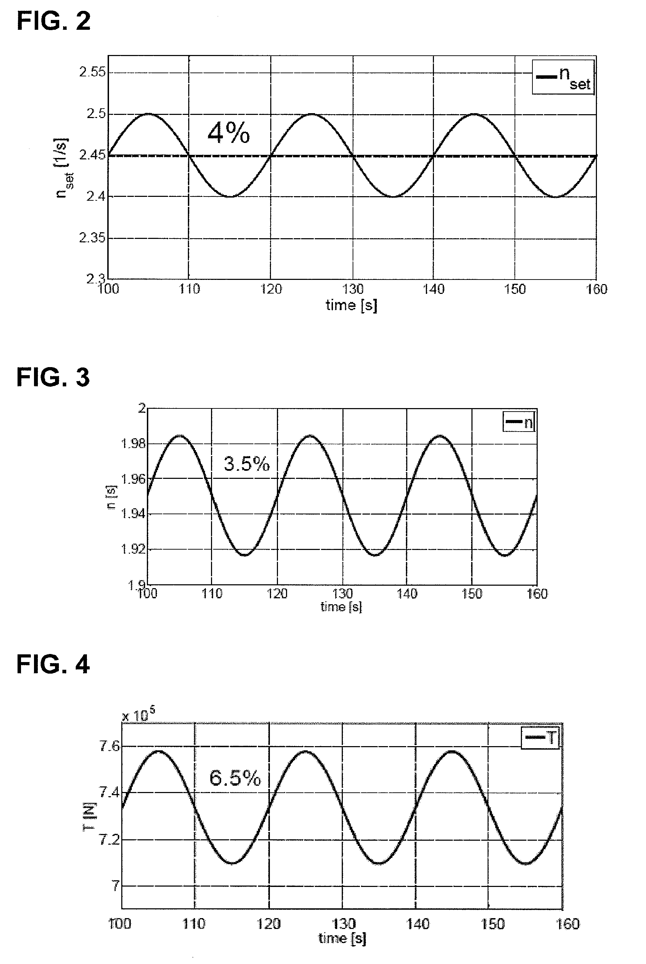

Figs. 2 to 4 show an exemplary result of the simulation for Ship 1 where the target angular velocity $n_{set}$ was varied around the steady state.

Fig. 2 shows the target angular velocity $n_{set}$, which oscillated harmonically with an amplitude of $\pm 0.05$ s$^{-1}$ around a constant part $n_{const}$ of the target angular velocity $n_{set}$ of 2.45 s$^{-1}$ with an oscillation period of 20 s. The relative angular velocity variation was 4% with respect to the stationary target angular velocity $n_{set}$.

Figs. 3 and 4 show the results for the actual angular velocity n and the torque T, respectively. Amplitude and phase of the oscillations differed from that of the target angular velocity $n_{set}$. The torque T showed a relative torque variation of 6.5%, thus being very sensitive to the variations in control input.

Next, Process 1 was carried out. As a result, a frequency range for each ship was obtained where the simulated advance velocity $u_a$ was close to the exact value determined by an experimental setup. The frequency range for Ship 1 was from 0.4 to 7 Hz, and the frequency range for Ship 2 from 0.2 to 3 Hz. The relative error between the solution and the exact value was in average 1.5% and never larger than 3%.

In order to test the solution sensitivity to changes in certain parameters, the following parameters were changed: the mass m of the ship, the mass of water $m_w$ in the propeller control volume, the propeller moment of inertia $I_p$, and the constant part $n_{const}$ of the target angular velocity $n_{set}$. Among these four tests, only two showed a change in the solution behaviour, namely the mass of the ship and the constant part $n_{const}$ of the target angular velocity $n_{set}$.

When the mass m of the ship was changed, there occurred only a small shift in the lower limit of the frequency range. Heavier ships reached the lower limit at slightly higher frequencies. The solutions in the rest of the frequency range were very close to each other.

When the constant part $n_{const}$ of the target angular velocity $n_{set}$ was changed, the cruise speed of the ship changed. This had the same effect as changing the inertia of the ship. The lower limit of the frequency range shifted towards lower limit values as the constant part $n_{const}$ of the of the target angular velocity $n_{set}$ decreased.

Considering the capabilities of the propulsion system, a frequency between 0.1 and 0.4 Hz was identified as the optimum frequency of harmonic excitation for the two ships.

The frequency obtained from Process 1 was used in Process 2 to determine the advance velocity $u_a$ on board of the ships. The results were very promising. The results showed that it is possible to determine angular velocity $u_a$ as a global quantity on board of a ship using measurement data produced by inducing harmonic excitation in the ship propulsion system when the ship is assumed to sail under a steady state. The results also showed that the angular velocity $u_a$ can be determined with a small relative error, so that propeller efficiency $\eta$ can be calculated online on board of the ship with high accuracy.

Specific Embodiments

In a specific embodiment of the invention, the navigation system is fed with the propeller efficiency taking into account the theoretical or actual advance velocity under different flow conditions (e.g., velocity of the ship, loading condition of the ship, propeller rotation speed, the depth of the water etc.) for adjusting the propeller rotation speed and in case of controlled pitch propellers also the pitch of propeller blade. This data can be based on theoretical propeller efficiency calculations, simulation of propeller function or test trials with model or actual ship.

In an additional embodiment of the invention, there is formed a simulation model of the flow conditions in the area of the propeller in the ship navigation system which is used to optimise the propeller efficiency taking into account the hull geometry of the ship, the loading condition of the ship and the depth of the water below the ship or on the estimated route of the ship.

The flow conditions below the ship in the vicinity of the propeller can also be measured, and the flow velocity and direction information may be used for the propeller efficiency definition and adjustment correspondingly.

The calculation of advance velocity can be combined with speed-through-water measurements to increase accuracy of calculation.

Yet another embodiment of the invention is a ship navigation system using the collected data from the propeller efficiency in different loading conditions or simulation of propeller efficiency for the purpose of planning the schedule and route of the ship to gain maximum fuel efficiency and/or maximum net earning of a ship.

In yet another embodiment of the invention, the propeller, ship hull and propulsion system efficiency are monitored by comparing the optimal efficiency parameters ship water velocity, propeller rotation speed and fuel efficiency of the propulsion system of the ship with the actual parameters and using the information in scheduling ship maintenance.

## Claims

1. A method of determining propeller efficiency on board of a ship, comprising the steps of:

   obtaining angular velocity of the propeller;
   obtaining thrust produced by the propeller;
   obtaining torque;
   determining advance velocity of the water entering the propeller plane as a global quantity using measurement data produced by inducing harmonic excitation in the ship propulsion system when the ship is assumed to sail under a steady state; and
   calculating the propeller efficiency based on the obtained values of angular velocity, thrust and torque and the determined value of advance velocity.

2. A method according to claim 1, wherein the harmonic excitation is induced by artificially introducing controlled oscillations in the ship propulsion system.

3. A method according to claim 2, wherein the oscillations are introduced by changing target angular velocity of the propeller.

4. A method according to any one of the preceding claims, wherein the measurement data is based on thrust data.

5. A method according to any one of the preceding claims, wherein the frequency of the harmonic excitation is in the order of $10^{-1}$ Hz.

6. A method according to any one of the preceding claims, wherein the step of determining the advance velocity includes modelling the ship dynamics by a set of interdependent equations describing torque control, rotational dynamics of the ship propulsion system, propeller dynamics, and hull dynamics.

7. A method according to any one of the preceding claims, wherein the ship has a mass in the order of $10^3$ tons or more.

8. Device for determining propeller efficiency on board of a ship, comprising:

   angular velocity obtaining means for obtaining angular velocity of the propeller;
   thrust obtaining means for obtaining thrust produced by the propeller;
   torque obtaining means for obtaining torque;
   advance velocity determining means for determining advance velocity of the water entering the propeller plane based on measurement data produced by inducing harmonic excitation in the ship propulsion system when the ship is assumed to sail under a steady state; and
   calculating means for calculating the propeller efficiency based on the angular velocity obtained by the angular velocity obtaining means, the thrust obtained by the thrust obtaining means, the torque obtained by the engine torque obtaining means, and the advance velocity determined by the advance velocity determining means.

9. Use of the method according to any one of claims 1 to 7 or the system according to claim 8 for optimizing propulsion efficiency or overall economical efficiency of the ship.

10. Use of the method according to any one of claims 1 to 7 or the system according to claim 8 for scheduling ship maintenance.

11. Use of the method according to any one of claims 1 to 7 or the system according to claim 8 for designing a propeller.

# Fig. 1

## FIG. 2

## FIG. 3

## FIG. 4

**European Patent Office**

**EUROPEAN SEARCH REPORT**

Application Number

EP 08 15 1821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 4 334 425 A (CRANE HAROLD E) 15 June 1982 (1982-06-15) * abstract; claim 1; figures * ----- | 1,8 | INV. G01L3/00 G01L3/26 B63H1/14 |
| A | EP 0 215 500 A (SHELL INT RESEARCH [NL]) 25 March 1987 (1987-03-25) * abstract; claim 1 * ----- | 1,8 | |
| A | US 4 843 575 A (CRANE HAROLD E [US]) 27 June 1989 (1989-06-27) * abstract; figures * ----- | 1,8 | |
| | | | **TECHNICAL FIELDS SEARCHED (IPC)** B63H G01L B63B |

The present search report has been drawn up for all claims

| Place of search | Date of completion of the search | Examiner |
|---|---|---|
| Munich | 16 July 2008 | Nicol, Yann |

EPO FORM 1503 03.82 (P04C01)

**ANNEX TO THE EUROPEAN SEARCH REPORT
ON EUROPEAN PATENT APPLICATION NO.**

EP 08 15 1821

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2008

| Patent document cited in search report | | Publication date | Patent family member(s) | | Publication date |
|---|---|---|---|---|---|
| US 4334425 | A | 15-06-1982 | GB | 2075687 A | 18-11-1981 |
| | | | JP | 2141824 U | 29-11-1990 |
| | | | JP | 56164922 A | 18-12-1981 |
| EP 0215500 | A | 25-03-1987 | DE | 3688545 D1 | 15-07-1993 |
| | | | DE | 3688545 T2 | 07-10-1993 |
| | | | JP | 62085794 A | 20-04-1987 |
| US 4843575 | A | 27-06-1989 | NONE | | |

EPO FORM P0459

For more details about this annex : see Official Journal of the European Patent Office, No. 12/82

**EP 2 093 552 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4459671 A
- US 4334425 A

- US 6227918 B1